**Europäisches Patentamt**

**European Patent Office**

**Office européen des brevets**

(19)

(11) Numéro de publication: **0 157 694**
**B1**

(12) **FASCICULE DE BREVET EUROPEEN**

(45) Date de publication du fascicule du brevet:
28.12.88

(51) Int. Cl.⁴: **F 16 C 39/06,** H 02 K 7/09

(21) Numéro de dépôt: **85400549.3**

(22) Date de dépôt: **22.03.85**

(54) Palier magnétique radial actif à rotor massif pour l'amortissement des fréquences critiques.

(30) Priorité: **26.03.84 FR 8404650**

(43) Date de publication de la demande:
**09.10.85 Bulletin 85/41**

(45) Mention de la délivrance du brevet:
**28.12.88 Bulletin 88/52**

(84) Etats contractants désignés:
**CH DE GB IT LI SE**

(56) Documents cités:
**FR-A- 2 052 314**
**FR-A- 2 177 309**

**PATENTS ABSTRACTS OF JAPAN, vol. 7, no. 215**
**(M-244)[1360], 22 septembre 1983, page 91M244; & JP -**
**A - 58 109 719 (HITACHI SEISAKUSHO K.K.) 30-06-1983**

(73) Titulaire: **SOCIETE EUROPEENNE DE PROPULSION**
**(S.E.P.) Société Anonyme dite:, 24 Rue Salomon de**
**Rothschild, F-92150 Suresnes (FR)**

(72) Inventeur: **Habermann, Helmut, 63, rue de Bizy,**
**F-27200 Vernon (FR)**
Inventeur: **Brunet, Maurice, Le bout aux Roussel Ste**
**Colombe, F-27950 St Marcel (FR)**
Inventeur: **Gerbier, Alain, 17 bis Grande Rue,**
**F-78270 Gommecourt (FR)**

(74) Mandataire: **Thevenet, Jean-Bruno et al, Cabinet BEAU**
**DE LOMENIE 55 rue d'Amsterdam, F-75008 Paris (FR)**

## Description

La présente invention a pour objet un palier magnétique radial actif comprenant un stator à champ tournant composé d'une armature et d'enroulements d'électro-aimant régulièrement répartis à la périphérie du stator, un rotor solidaire d'un arbre rotatif et disposé en regard du stator, des détecteurs de la position radiale du rotor par rapport au stator, et des circuits d'asservissement pour modifier le courant circulant dans les enroulements d'électro-aimant en fonction des signaux délivrés par les détecteurs de position, chaque enroulement d'électro-aimant comprenant, montés en série, un premier bobinage alimenté dans un premier sens et un second bobinage alimenté dans le sens contraire du premier bobinage et décalé angulairement par rapport au premier bobinage.

On sait que, pour toute pièce tournante, il existe des vitesses critiques pour lesquelles la pièce se déforme en flexion avec présence de nœuds et de ventres. Il est souhaitable de pouvoir franchir ces vitesses critiques avec un bon amortissement.

Le brevet français FR-A-2 336 603 décrit précisément un dispositif d'amortissement des fréquences critiques d'un rotor monté sur des paliers magnétiques actifs radiaux. Ce dispositif, qui comprend des moyens d'amplification sélective du gain du circuit d'asservissement des paliers magnétiques, en phase ou en avance de phase, dans une bande de fréquence étroite centrée sur une fréquence égale à la vitesse de rotation du rotor, fonctionne de façon satisfaisante. Toutefois, compte tenu du niveau requis pour l'amplification sélective, et donc de l'accroissement de la valeur du champ magnétique nécessaire pour fournir un amortissement efficace lors du passage des fréquences critiques, les paliers magnétiques doivent obligatoirement comporter une armature rotorique annulaire constituée par un matériau ferromagnétique feuilleté. Ceci n'est pas réalisable facilement sur toutes les machines tournantes équipées d'arbres de très grand diamètre, et n'est pratiquement pas applicable à des machines existantes sans démontage complet de celles-ci. La réalisation d'un feuilletage est en outre souvent risquée si les vitesses de rotation doivent être très élevées.

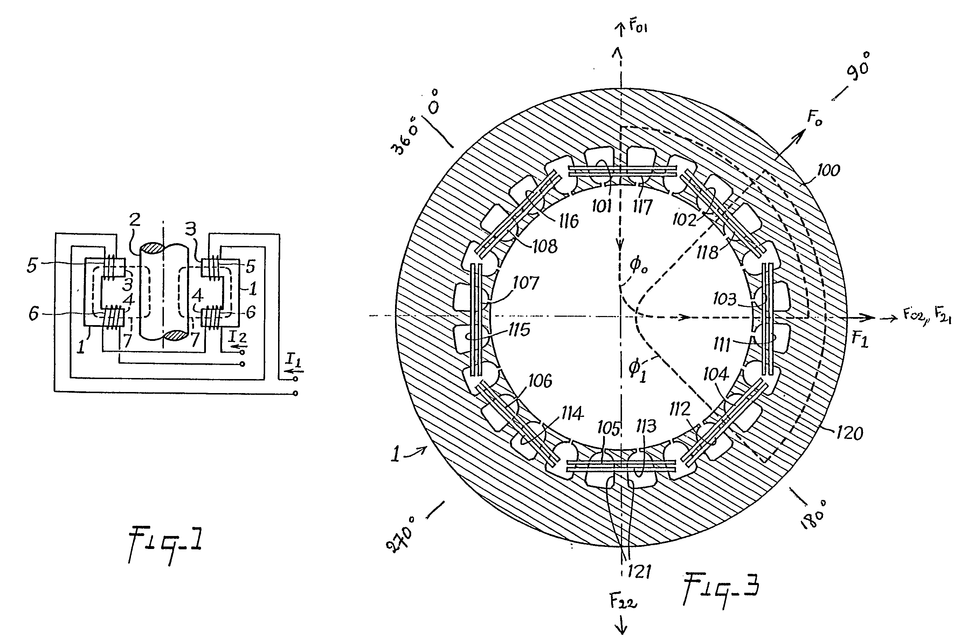

Afin de s'affranchir de la nécessité de réaliser un feuilletage sur le rotor, il est possible d'envisager l'utilisation de paliers magnétiques radiaux à flux magnétique axial, du type représenté sur la figure 1, dans lequel des électro-aimants de palier en forme de U présentent des pôles situés de part et d'autre d'un plan de symétrie perpendiculaire à l'axe du rotor. Dans ce cas, un rotor non feuilleté, massif ou tubulaire peut être utilisé afin de permettre un amortissement lors du passage de fréquences critiques. Ce mode de réalisation présente cependant des limites dans la mesure où les forces magnétiques ne peuvent pas être très importantes et la pénétration du flux magnétique dans le rotor ne peut être profonde. Par ailleurs, il se produit un échauffement du rotor par les courants de Foucault car le champ magnétique qui tourne en principe en synchronisme avec le rotor n'est pas sinusoïdal.

On connaît par ailleurs par le document FR-A-2 052 314 un système de palier magnétique pour un rotor à axe de rotation essentiellement vertical, qui met en œuvre des moyens électromagnétiques de stabilisation active coopérant avec des aimants de sustentation créant un champ magnétique principal constant. Il est indiqué dans ce document que les moyens électromagnétiques de stabilisation peuvent être sollicités par un champ tournant servant à l'entraînement du rotor. Toutefois, dans ce cas, la présence d'un champ tournant qui vise, comme dans un moteur à champ tournant classique, à créer un couple d'entraînement en rotation du rotor, ne peut pas contribuer à améliorer la fonction propre du système de palier magnétique.

La présente invention vise à remédier aux inconvénients précités et à permettre de réaliser facilement un amortissement efficace des perturbations apparaissant au passage des fréquences critiques, même pour des rotors de grand diamètre nécessitant des paliers magnétiques à champ magnétique d'induction élevée.

Ces buts sont atteints grâce à un palier magnétique radial actif du type mentionné au début, caractérisé en ce que le rotor est plein et réalisé de façon massive, sans feuilletage, en ce qu'il est prévu au moins trois enroulements, comprenant chacun une paire de bobinages non diamétralement opposés, chaque paire de bobinages constituant un enroulement est alimentée en courant continu ayant un sens de circulation invariable à partir d'un amplificateur propre à courant continu, en ce qu'il est prévu un dispositif de détection de la rotation du rotor, et en ce que les enroulements d'électro-aimant sont alimentés successivement à tour de rôle, chacun à l'aide de son amplificateur propre, à partir des circuits d'asservissement, de façon synchronisée avec la rotation du rotor, de manière à produire un champ magnétique tournant à flux radial qui suit les mouvements du rotor et exerce sur le rotor une force radiale tournante.

Grâce à ces mesures, le rotor ne voit pratiquement pas de variations de champ magnétique sur un tour. Ceci permet donc un amortissement efficace au passage des fréquences critiques sans produire d'échauffement particulier par des courants de Foucault.

De façon plus particulière, les bobinages d'enroulements différents sont superposés.

Le premier bobinage d'un enroulement considéré est superposé au deuxième bobinage de l'avant-dernier enroulement alimenté avant l'enroulement considéré.

Le premier bobinage de chaque enroulement est intercalé entre les premier et deuxième bobinages de l'enroulement alimenté immédiatement précédemment.

Selon un mode de réalisation conduisant à de très bonnes performances, le palier magnétique comprend huit enroulements comprenant chacun une paire de bobinages et alimentés chacun à partir d'un amplificateur propre.

Dans ce cas, les premier et deuxième bobinages de chacun des enroulements sont décalés de 90° l'un par rapport à l'autre.

Selon un autre mode de réalisation préférentiel, le palier magnétique comprend dix paires d'enroulement comprenant chacun une paire de bobinages et alimentés chacun à partir d'un amplificateur propre.

Le palier magnétique selon l'invention est ainsi particulièrement adapté pour être monté à l'extrémité d'un arbre de grand diamètre.

D'autres caractéristiques et avantages de l'invention ressortiront de la description qui fait suite de modes particuliers de réalisation de l'invention, donnés à titre d'exemples, en référence aux dessins annexés, sur lesquels:

– la figure 1 est une vue schématique d'un palier magnétique radial à flux axial,

– la figure 2 est une vue schématique d'un premier exemple de réalisation d'un palier magnétique radial à flux radial conforme à l'invention,

– la figure 3 est une vue schématique en coupe selon un plan radial du stator du palier magnétique radial de la figure 2,

– la figure 4 est une vue schématique d'un second exemple de réalisation de palier magnétique radial à flux radial selon l'invention,

– les figures 5a et 5b montrent l'évolution dans le temps du champ magnétique et de la force correspondante, et

– la figure 6 montre schématiquement l'application d'un palier magnétique selon l'invention à une ligne d'arbres de rotor.

On voit sur la figure 1 un palier magnétique radial à flux axial comprenant des électro-aimants 1 en forme de U présentant chacun des pièces polaires 3, 4 symétriques par rapport à un plan radial perpendiculaire à l'axe du rotor 2. Des enroulements 5, 6 parcourus par des courants d'excitation $I_1$, $I_2$ respectivement sont disposés sur les pièces polaires 3, 4. Ce type de palier crée un flux magnétique selon les lignes pointillées référencées 7, c'est-à-dire un flux qui circule axialement à la périphérie du rotor 2 qui peut être massif ou tubulaire et ne nécessite pas de feuilletage. Un tel type de palier magnétique permet de créer un amortissement lors du passage du rotor à une vitesse critique, mais présente cependant des inconvénients comme indiqué ci-avant dans la présente description et ne peut être adapté à tous les types de machines tournantes.

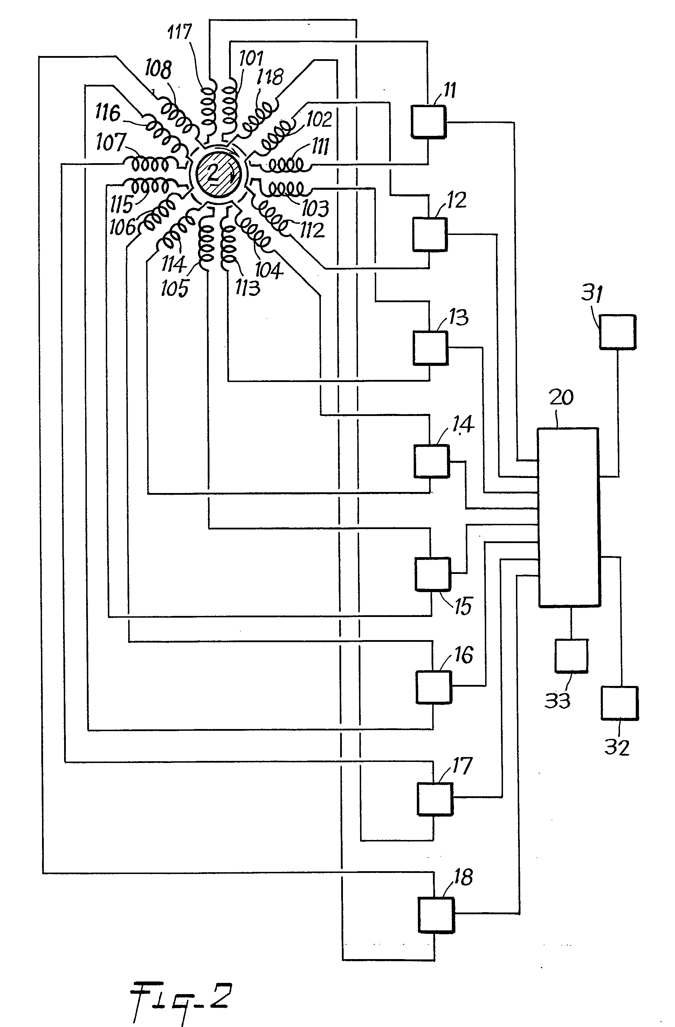

Les figures 2 à 4 concernent des paliers magnétiques radiaux à flux radial qui, contrairement au palier de la figure 1, peuvent s'adapter à des rotors de grand diamètre et à des rotors tournant à vitesse élevée.

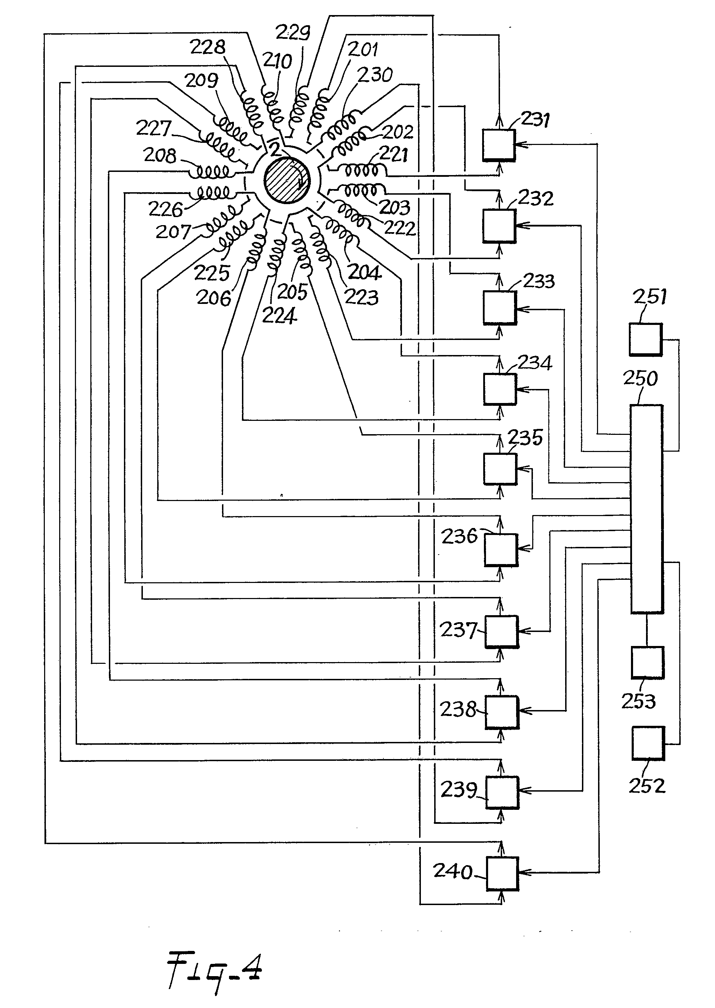

On a représenté sur les figures 2 et 3 un stator 100 de palier magnétique radial comprenant, montées dans des encoches 121 d'une armature fixe 120, une pluralité de bobinages 101 à 108, 111 à 118. Pour plus de clarté, sur la figure 2, comme également sur la variante de la figure 4, seuls les bobinages d'électro-aimant ont été représentés de façon symbolique.

Comme on peut le voir sur les figures 2 et 3, huit paires de bobinages 101, 111; 102, 112;...108, 118 sont régulièrement réparties à la périphérie de l'armature fixe 120. Chaque paire de bobinages 101, 111;...108, 118 constituant un enroulement est alimentée simultanément par un courant contraire à partir d'un amplificateur propre 11,–18 fournissant un courant continu dont le sens de circulation est invariable. Pour chaque enroulement constitué par une paire de bobinages, le premier bobinage 101,...108 est alimenté dans un premier sens et le second bobinage 111,...118 est alimenté dans le sens contraire du premier bobinage. Pour chaque enroulement 101, 111;...108, 118 le second bobinage 111,...118 est décalé angulairement de 90° par rapport au premier bobinage 101,...108.

Grâce à un circuit 33 permettant de réaliser une commutation au sein du circuit d'asservissement 20 destiné à alimenter les enroulements d'électro-aimant, les différentes paires de bobinages 101, 111; 102, 112;...108, 118 disposées successivement à la périphérie du stator 100 et venant successivement en regard d'une même zone du rotor 2 lorsque celui-ci est en rotation, sont alimentées successivement à tour de rôle par le circuit d'asservissement 20. Le circuit d'asservissement 20 alimente ainsi à tour de rôle et successivement dans cet ordre les amplificateurs 11, 12,...18, le rotor 2 tournant dans le sens de la flèche représentée sur la figure 2.

Le circuit d'asservissement 20 est constitué de façon classique et permet de régler la valeur du courant appliqué aux enroulements d'électro-aimants de stator en fonction des signaux fournis par des détecteurs 31, 32 de la position radiale du rotor 2 détectant les déplacements du rotor selon deux directions orthogonales dans un plan radial.

Le circuit 33 permettant de réaliser la commutation de l'alimentation des différents amplificateurs 11, 12,...18 comprend un organe de détection de la vitesse de rotation du rotor 2, afin de permettre la synchronisation de l'alimentation successive des différents amplificateurs 11,...18 avec la rotation du rotor. Chaque paire de bobinages 101, 111; 102, 112;...118 exerce sur le rotor une action résultante qui, considérée par rapport au stator, est décalée de $-\dfrac{2\pi}{n}$ par rapport à l'action de la paire de bobinages excitée immédiatement précédemment, n étant le nombre total de paires de bobinages réparties sur le stator. Des impulsions de commutation peuvent ainsi être produites en fonction de la rotation du rotor 2, à partir des signaux délivrés par l'organe de détection de vitesse chaque fois que le rotor a tourné d'un angle $\dfrac{2\pi}{n}$. La localisation des paires de bobinages du stator étant bien définie par rapport aux détecteurs de la position radiale du rotor 31, 32, chaque amplificateur 11,...18 alimenté successivement par le circuit d'asservissement 20 en fonction de la production des impulsions de commutation peut exercer sur le rotor une action d'attraction adaptée en fonction des signaux délivrés par les détecteurs 31, 32 afin de tendre à maintenir le rotor dans une position d'équilibre prédéterminée.

Afin de faciliter le montage, le premier bobinage 101,...108 d'un enroulement donné est superposé au deuxième bobinage 117,...116 de l'avant-dernier enroulement alimenté avant ledit enroulement donné. Par ailleurs, on voit sur la figure 2 que les différents premiers bobinages 101,...108 d'enroulements successifs sont régulièrement répartis en étant angulairement distants de 45° les uns des autres. De même, les différents seconds bobinages 111,...118 d'enroulements successifs sont régulièrement espacés angulairement de 45° les uns des autres. On notera également que le premier bobinage 101,...108 de chaque enroulement est intercalé entre les premiers et deuxièmes bobinages 108, 118;...107, 117 de l'enroulement alimenté immédiatement précédemment et situé angulairement à mi-chemin entre ceux-ci.

Les différents bobinage sont identiques les uns aux autres et les amplificateurs 11 à 18 présentent également chacun des caractéristiques identiques. Ceci garantit la production d'un champ magnétique tournant à flux radial qui suit les mouvements du rotor 2. Ce dernier ne voit donc pas de variations sensibles du champ magnétique sur un tour. Ceci permet l'utilisation d'un rotor massif tout en assurant un amortissement lors du passage des fréquences critiques.

Afin de faciliter la compréhension, le flux magnétique radial $\Phi_0$ circulant dans le rotor 2 et l'armature 120 du stator 100 du palier à un instant $t_0$ pendant lequel les bobinages 101, 111 du premier enroulement sont alimentés à partir de l'amplificateur 11 tandis qu'aucun des autres bobinages ne reçoit de courant, a été figuré en traits discontinus sur la figure 3. On a également représenté sur cette même figure, en pointillés, le flux magnétique radial $\Phi_1$ circulant dans le rotor 2 et l'armature 120 du stator 100 du palier à un instant $t_1$ correspondant à une rotation du rotor de 45° et pendant lequel les bobinages 102, 112 du second enroulement sont alimentés à partir de l'amplificateur 12 tandis que tous les autres bobinages sont inactifs et ne reçoivent pas de courant. La force $F_0$ résultante exercée sur le rotor à l'instant $t_0$ et due au flux $\Phi_0$ créé par les bobinages 101, 111 et la force résultante $F_1$ exercée sur le rotor à l'instant $t_1$ et due au flux $\Phi_1$, créé par les bobinages 102, 112 sont représentées par des flèches sur la figure 3. On voit que la force résultante exercée sur le rotor suit la rotation de celui-ci, ce qui tend bien à créer un amortissement.

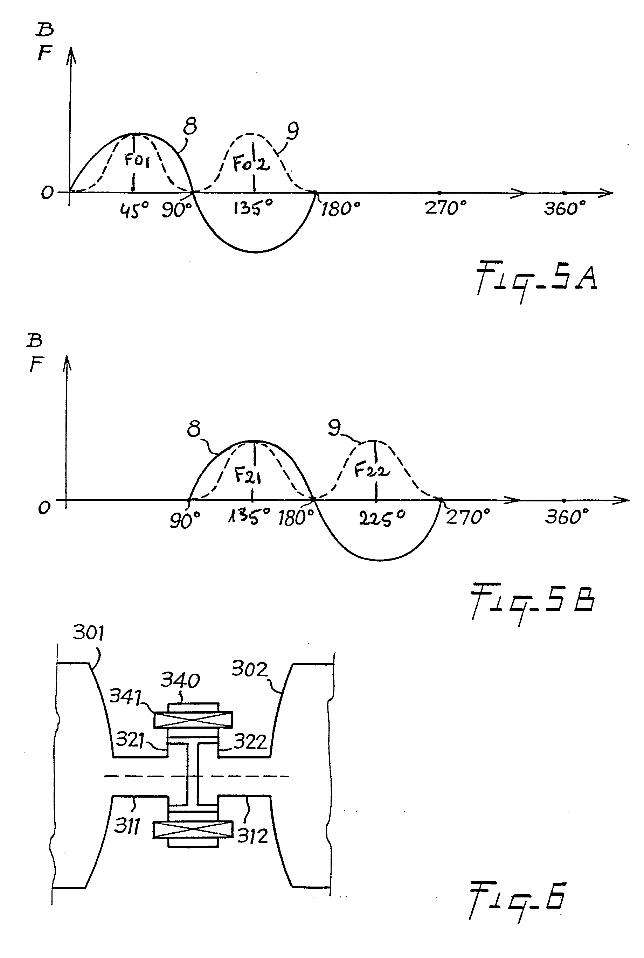

Les figures 5a et 5b représentent respectivement pour des instants $t_0$ et $t_2$ la forme de l'induction magnétique B (courbe 8 en trait continu) et celle de la force F due au champ magnétique et exercée sur le rotor (courbe 9 en trait discontinu), en fonction de la position angulaire par rapport à une origine située au niveau du point 0 de la figure 3 décalé par rapport au centre du premier bobinage 101. On constate que la forme de l'induction magnétique B est sinusoïdale tandis que la force F (composantes $F_{01}$, $F_{02}$, $F_{11}$, $F_{12}$ des figures 3 et 5a, 5b), proportionnelle au carré de l'induction magnétique B, garde toujours le même signe. La différence entre le temps $t_2$, et le temps $t_0$ correspond à une rotation de 90° du rotor 2 par rapport à la position qu'il présentait au temps $t_0$. La figure 5b correspond ainsi à un instant où les bobinages 103 et 113 sont alimentés partir de l'amplificateur 13 tandis que la figure 5a correspond à l'instant $t_0$ auquel les bobinages 101 et 111 sont alimentés à partir de l'amplificateur 11.

Grâce au chevauchement des différentes paires de bobinages 101, 111; 102, 112; 103, 113;...108, 118, puisque le bobinage 102 par exemple est intercalé entre les bobinages 101 et 103, et grâce à l'alimentation successive des différents amplificateurs 11, 12, ...18, il est ainsi possible de réaliser un champ tournant en synchronisme avec le rotor 2, dans la mesure où une information de vitesse de rotation du rotor est fournie au circuit d'asservissement 20 par le circuit 33 pour commander la commutation successive des différents amplificateurs 11 à 18. Le champ magnétique créé présente un caractère très sinusoïdal lorsque l'on utilise huit paires de bobinages 101, 111,...108, 118 comme représenté sur la figure 2.

Le champ magnétique créé peut cependant présenter un caractère sinusoïdal encore plus régulier si l'on utilise dix paires de bobinages 201, 221; 202, 222;...210, 230 associées à dix amplificateurs 231 à 240, comme représenté sur la figure 4. Avec un tel mode de réalisation, on diminue très fortement les fluctuations du champ magnétique dans le rotor, ce qui permet à la fois d'utiliser un simple rotor massif et d'obtenir la création d'une force amortissante permettant un franchissement aisé des vitesses critiques. Sur la figure 4, les détecteurs 251, 252 et les circuits 250, 253 correspondent respectivement aux éléments référencés 31, 32 et 20, 33 sur la figure 2. De même, les amplificateurs 231 à 240 peuvent présenter des caractéristiques analogues à celles des amplificateurs 11 à 18. Enfin, comme dans le cas de la figure 2, les bobinages 201, 221; 202, 222;...210, 230 sont régulièrement répartis à la périphérie du stator, deux bobinages successifs 201, 202 ou 221, 222 étant décalés de 36° environ, et il est prévu un chevauchement entre bobinages, le bobinage 202 par exemple étant intercalé entre les bobinages 201 et 221. Pour faciliter le montage, les seconds bobinages 221, 222,...230 des paires de bobinages sont également disposés dans les mêmes encoches de stator que des premiers bobinages 203, 204,...202 de paires de bobinages différentes, avec des décalages réguliers.

La figure 6 montre un exemple d'application de l'invention à des grandes machines présentant plusieurs sections 301, 302 successives avec des arbres 311, 312 terminés par une partie d'extrémité libre 321, 322 de section accrue. La présente invention permet de disposer directement autour des parties terminales massives 321, 322 un stator 340 muni d'enroulements d'électro-aimants 341 réalisés de la manière décrite ci-dessus par exemple avec huit ou dix paires de bobinages alimentées séquentiellement. Ceci contribue à réaliser un palier magnétique efficace constituant un amortisseur actif facilitant notamment le passage des vitesses critiques. On notera que le palier radial selon l'invention évite la réalisation de feuilletages sur les extrémités d'arbre 311, 312 et peut donc être appliqué quel que soit le diamètre ou la vitesse de rotation de l'arbre. La localisation sur les parties terminales 321, 322 de section accrue permet notamment une réalisation sur les machines existantes où l'espace libre pour la mise en place d'un palier ou d'un amortisseur est limité.

**Revendications**

1. Palier magnétique radial actif comprenant un stator (1) à champ tournant composé d'une armature (100) et d'une pluralité d'enroulements d'électro-aimant (101 à 118) régulièrement répartis à la périphérie du stator (1), un rotor (2) solidaire d'un arbre rotatif et disposé en regard du stator (1), des détecteurs (31, 32) de la position radiale du rotor (2) par rapport au stator (1), et des circuits d'asservissement (20) pour modifier le courant circulant dans les enroulements d'électro-aimant (101 à 118) en fonction des signaux délivrés par les détecteurs de position (31, 32), chaque enroulement d'électro-aimant comprenant, montés en série, un premier bobinage (101 à 108) alimenté dans un premier sens et un second bobinage (111 à 118) alimenté dans le sens contraire du premier bobinage et décalé angulairement par rapport au premier bobinage, caractérisé en ce que le rotor (2) est plein et réalisé de façon massive, sans feuilletage, en ce qu'il est prévu au moins trois enroulements, comprenant chacun une paire de bobinages non diamétralement opposés, chaque paire de bobinages (101, 111;...108, 118) constituant un enroulement est alimentée en courant continu ayant un sens de circulation invariable à partir d'un amplificateur propre (11,...18) à courant continu, en ce qu'il est prévu un dispositif (33) de détection de la rotation du rotor, et en ce que les enroulements d'électro-aimant (101, 118) sont alimentés successivement à tour de rôle, chacun à l'aide de son amplificateur propre, à partir des circuits d'asservissement, de façon synchronisée avec la rotation du rotor, de manière à produire un champ magnétique tournant à flux radial qui suit les mouvements du rotor et exerce sur le rotor une force radiale tournante.

2. Palier magnétique selon la revendication 1, caractérisé en ce que des bobinages d'enroulements différents sont superposés.

3. Palier magnétique selon la revendication 2, caractérisé en ce que le premier bobinage (101,...108) d'un enroulement considéré est superposé au deuxième bobinage (117,...116) de l'avant-dernier enroulement alimenté avant l'enroulement considéré.

4. Palier magnétique selon l'une quelconque des revendications 1 à 3, caractérisé en ce que le premier bobinage (101,...108) de chaque enroulement est intercalé entre les premier et deuxième bobinages (108, 118;...107, 117) de l'enroulement alimenté immédiatement précédemment.

5. Palier magnétique selon l'une quelconque des revendications 1 à 4, caractérisé en ce qu'il comprend huit enroulements comprenant chacun une paire de bobinages (101, 111,...108, 118) et alimentés chacun à partir d'un amplificateur propre (11,...18).

6. Palier magnétique selon l'une quelconque des revendications 1 à 4, caractérisé en ce qu'il comprend dix enroulements comprenant chacun une paire de bobinages (201, 221,...210, 230) et alimentés chacun à partir d'un amplificateur propre (231,...240).

7. Palier magnétique selon la revendication 5, caractérisé en ce que les premier et deuxième bobinages de chacun des enroulements sont décalés de 90° l'un par rapport à l'autre.

8. Palier magnétique selon l'une quelconque des revendications 1 à 7, caractérisé en ce qu'il est monté à l'extrémité d'un arbre de grand diamètre (321, 322).

**Claims**

1. Active radial magnetic bearing comprising a stator (1) with rotary field composed of an armature (100) and a plurality of electromagnetic coils (101 to 118) regularly distributed on the periphery of the stator (1) fast with a rotary shaft and placed opposite the stator (1), detectors (31, 32) for detecting the radial position of the rotor (2) with respect to the stator (1), and servo-control circuits (20) for adjusting the current going through the electromagnetic coils (101 to 118) as a function of the signal delivered by the position detectors (31, 32) each electromagnetic coil comprising, mounted in series, a first winding (101 to 108) supplied in a first direction and a second winding (111 to 118) supplied in the opposite direction, and shifted angularly with respect to the first winding, characterized in that the rotor (2) is solid, and produced in massive manner, without lamination, in that there is provided at least three coils, each one comprising a pair of windings non-diametrically opposite, each pair of windings (101, 111;...108, 118) constituting a coil is supplied with direct current having a constant flowing direction from its own D.C. amplifier (11,...18), in that a device (33) is provided for detecting the rotation of the rotor, and in that the electromagnetic coils (101, 118) are supplied successively one after the other, each one by means of its own amplifier, from servo-control circuits, synchronously with the rotation of the rotor, so as to produce a rotary magnetic field with radial flux which follows the movements of the rotor and exerts on the rotor a rotary radial force.

2. Magnetic bearing according to claim 1, characterized in that coils of different windings are superposed.

3. Magnetic bearing according to claim 2, characterized in that the first coil (101,...108) of one particular winding is superposed to the second coil (117,...116) of the penultimate winding supplied before the winding in question.

4. Magnetic bearing according to any one of claims 1 to 3, characterized in that the first winding (101...108 in every coil is inserted between the first and second windings (108, 118; 107, 117) of the coil supplied immediately before.

5. Magnetic bearing according to any one of claims 1 to 4, characterized in that it comprises eight coils, each one comprising one pair of windings (101, 111,...108, 118) and each one supplied from its own amplifier (11,...18).

6. Magnetic bearing according to any one of claims 1 to 4, characterized in that it comprises ten coils, each coil comprising one pair of windings (201, 221,...210, 230) and each one supplied from its own amplifier (231,...240).

7. Magnetic bearing according to claim 5, characterized in that said first and second windings of every coil are shifted by 90° with respect to one another.

8. Magnetic bearing according to any one of claims 1 to 7, characterized in that it is mounted on the end of a shaft of large diameter (321, 322).

**Patentansprüche**

1. Aktives radiales magnetisches Lager, aufweisend einen Stator (1) mit Drehfeld, bestehend aus einem Anker (100) und einer Anzahl von regelmässig an der Peripherie des Stators (1) verteilten Elektromagnetwicklungen (101 bis 118), einen fest mit einer Drehwelle verbundenen und gegenüber dem Stator (1) angeordneten Rotor (2), Fühler (31, 32) für die radiale Position des Rotors (2) in bezug auf den Stator (1) und Steuerungskreis (20) zum Abändern des in den Elektromagnetwicklungen (101 bis 118) zirkulierenden Stroms abhängig von den von den Positionsfühlern (31, 32) ausgegebenen Signalen, wobei jede Elektromagnetwicklung, in Reihe angebracht, eine in einer ersten Richtung gespeiste erste Spule (101 bis 108) und eine in der entgegengesetzten Richtung zur ersten Spule gespeiste und winkelmässig in bezug auf die erste Spule versetzte zweite Spule (111 bis 118) aufweist, dadurch gekennzeichnet, dass der Rotor (2) völlig ausgefüllt und massiv, ohne Schichtung ausgeführt ist, dass wenigstens drei Wicklungen vorgesehen sind, jeweils aufweisend ein Paar von nicht diametral gegenüberliegenden Spulen, wobei jedes eine Wicklung bildende Spulenpaar (101, 111;...118) mit Gleichstrom gespeist ist, der eine unveränderliche Zirkulationsrichtung ausgehend von einem eigenen Verstärker (11,...18) mit Gleichstrom besitzt, dass eine Fühlervorrichtung (33) für die Rotation des Rotors vorgesehen ist und dass die Elektromagnetwicklungen (101, 118) sukzessive der Reihe nach, jeweils mittels ihres eigenen Verstärkers ausgehend von den Steuerkreisen auf eine Weise synchronisiert mit der Rotation des Rotors gespeist werden, derart, dass ein magnetisches Drehfeld mit radialem Fluss erzeugt wird, das den Bewegungen des Rotors folgt und auf den Rotor eine radiale Drehkraft ausübt.

2. Magnetisches Lager nach Anspruch 1, dadurch gekennzeichnet, dass die verschiedenen Wicklungsspulen übereinander angeordnet sind.

3. Magnetisches Lager nach Anspruch 2, dadurch gekennzeichnet, dass die erste Spule (101...108) einer betrachteten Wicklung über der zweiten Spule (117...116) der vorletzten Wicklung angeordnet ist, gespeist vor der betrachteten Wicklung.

4. Magnetisches Lager nach einem beliebigen der Ansprüche 1 bis 3, dadurch gekennzeichnet, dass die erste Spule (101...108) einer jeden Wicklung zwischen der ersten und zweiten Spule (108, 118...; 107, 117) der unmittelbar vorhergehend gespeisten Wicklung eingeschaltet ist.

5. Magnetisches Lager nach einem beliebigen der Ansprüche 1 bis 4, dadurch gekennzeichnet, dass es acht Wicklungen aufweist, jeweils aufweisend ein Paar von Spulen (101, 111,...108, 118) und jeweils gespeist ausgehend von einem eigenen Verstärker (11,...18).

6. Magnetisches Lager nach einem beliebigen der Ansprüche 1 bis 4, dadurch gekennzeichnet, dass es sechs Wicklungen aufweist, jeweils aufweisend ein Paar von Spulen (201, 221...210, 230) und jeweils gespeist ausgehend von einem eigenen Verstärker (231,...240).

7. Magnetisches Lager nach Anspruch 5, dadurch gekennzeichnet, dass die erste und zweite Spule einer jeden der Wicklungen um 90° in bezug aufeinander versetzt sind.

8. Magnetisches Lager nach einem beliebigen der Ansprüche 1 bis 7, dadurch gekennzeichnet, dass es am Ende einer Welle mit grossem Durchmesser (321, 322) angebracht ist.

Fig-3

Fig-1

Fig-2

**EP 0 157 694 B1**

Fig-4

11

Fig_5A

Fig_5B

Fig_6